# EUROPEAN PATENT SPECIFICATION

(11) **EP 2 494 195 B1**
(45) Date of publication and mention of the grant of the patent: **20.08.2014**
(21) Application number: 09740706.8
(22) Date of filing: 28.10.2009
(51) Int. Cl.: F03D 11/00, F16C 33/78, F16J 15/32

(54) **X-SHAPED SEAL FOR ROLLING BEARING, IN PARTICULAR FOR ROLLING BEARING USED IN A WIND TURBINE**
X-FÖRMIGER DICHTUNGSRING FÜR EIN LAGER, INSBESONDERE FÜR EIN ROLLAGER EINER WINDTURBINE
ANNEAU D'ÉTANCHÉITÉ EN FORME DE X POUR UN PALIER, EN PARTICULIER POUR UN PALIER À ROULEMENT D'UNE ÉOLIENNE

(43) Date of publication of application: 05.09.2012
(73) Proprietor: Aktiebolaget SKF, 415 50 Göteborg (SE)
(72) Inventor: TANKE, Jesko-Henning, 87422 Schweinfurt (DE); OVIZE, Pascal, F-89530 Chitry Le Fort (FR); GRUBER, Andreas, A-8741 Maria Buch-Feistritz (AT); SWETE, Wolfgang, A-8720 Knittelfeld (AT)
(74) Representative: Casalonga, Axel
(86) International application number: PCT/EP2009/064216
(87) International publication number: WO 2011/050837

(56) References cited:
- CN-Y- 201 047 442
- DE-U- 1 940 357
- DE-U1-202008 017 339
- GB-A- 2 163 497
- GB-A- 2 316 720
- US-A- 5 372 230
- US-A1- 2005 051 974

## Description

The present invention relates to the field of seals used in the rolling bearings, and more particularly in the rolling bearings operating in an aggressive outdoor environment due to the presence of various kinds of pollution, such as splashing water, dust and other foreign matter, to the exposition of the ultraviolet radiation emitted by the sun, and to the variations of temperature.

This is notably the case of the rolling bearings used in a wind turbine in order to angularly orient the rotor of said turbine according to the direction of the wind, and to orient the blades of the turbine around their longitudinal axes.

Otherwise, in the case of rolling bearings, and more specifically in the case of large-sized rolling bearings used for instance in such wind turbine, each time the bearing is lubricated, there is a high increase in the pressure inside the bearing. During this operation, said pressure may raise to 0,4 MPa. Thus, there is a risk that the surplus grease will be ejected from the bearing at the location of the seals. In the case of large-sized rolling bearings, pressure relief valves are provided to allow this surplus grease to be ejected. Nonetheless, the surplus grease does sometimes escape from the bearing via the seals rather than through these valves.

However, there are numerous applications in which an escape of grease through the bearing seals must be reliably avoided, both during the lubricating of the bearings, i.e. while the interior of the bearings is being pressurized, and during normal running of the bearings, even in the case of relative movements that the two rings may do in addition to the rotational movements, under the action of the loads on the bearing. Such relative movements of the rings are relatively important more especially as the rolling bearing has a large diameter.

With the aim of avoiding this drawback, document FR-A-2 778 954 discloses a sealing arrangement for a rolling bearing comprising at least one row of rolling elements between first and second rings which are concentric and radially separated from one another by an annular space. This arrangement comprises an elastic seal fixed to the first ring and comprising a first lip pressing against a frustoconical bearing surface situated on the second ring inside the annular space, and a second lip pressing against a radial bearing surface of said second ring. The first lip of the seal is shaped in such a way that the force with which it presses against the frustoconical bearing surface increases with the pressure inside the bearing.

With such a sealing arrangement, the first lip opposes effectively any escape of grease, not only during lubrification but also during normal running of the bearing. Besides, the first and second lips which act in opposite directions against their bearing surfaces lying on the same ring of the rolling bearing are able to follow the relative movements of the two rings.

However, the sealing arrangement disclosed in this document has the drawback of being force fitted into a groove formed on the inner ring of the rolling bearing in order to obtain its retaining on said ring. This is detrimental in terms of mounting time and of cost.

One aim of the present invention is to overcome the aforementioned drawback.

It is a particular object of the present invention to provide a seal which is easy to install into a bearing, which prevents grease from escaping from the bearing, even under the effect of a raised pressure inside said bearing, and which also prevents the ingress of moisture, dust and other bodies into the bearing.

A further object to the present invention is to provide a seal having good wear and aging resistances.

Another object to the present invention is to provide a seal adapted to a large-sized rolling bearing, such as a bearing for a wind turbine.

The seal is adapted to a rolling bearing provided with an inner ring, with an outer ring and with at least one row of rolling elements between said outer and inner rings, and comprises at least two internal lips and two external lips intended to be respectively directed obliquely towards the internal side and the external side of the rolling bearing. Said internal and external lips have in cross section the overall shape of a X. Such a generic rolling bearing is known from DE 20 2008 017 339 U1.

Advantageously, the seal comprises a central portion from which the internal lips and the external lips are issued. The thickness of said lips may vary from the central portion towards their free ends.

In one embodiment, the seal also comprises a grip portion axially located towards the external lips. The grip portion may extend from the central portion. The free end of the grip portion is advantageously axially offset outwards relative to the external lips.

The seal may comprise at least two additional lips on its external side and/or on its internal side of the seal.

In one embodiment, the seal is formed from a thermoplastic urethane (TPU) liner. Alternatively, the seal can also be formed from another thermoplastic or from metal. The seal can also comprise both a metallic material and a plastic material such as the TPU.

The invention relates to a rolling bearing comprising an inner ring, an outer ring, at least one row of rolling elements, and at least one seal provided between said inner and outer rings. The seal comprises at least two internal lips and two external lips, said internal and external lips having in cross section the overall shape of a X. The inner and outer rings comprise opposite radial grooves inside which the free ends of the internal and external lips of the seal are located, wherein the axial length of the grooves is larger than the axial length between the internal lips and the external lips in a free state of the seal in order to have an axial gap between the internal lips and walls of the grooves and/or between the external lips and opposite walls of said grooves. Therefore, the seal is freely movable in axial direction relative to the inner and outer rings.

The internal and external lips of the seal are resiliently coupled in the radial direction with the inner and outer rings.

The seal may be freely movable in the circumferential direction relative to the inner ring and/or the outer ring.

The invention also relates to an assembly method of a seal inside a rolling bearing comprising an inner ring, an outer ring and at least one row of rolling elements between said outer and inner rings, said seal comprising at least two internal lips and two external lips having in cross section the overall shape of a X. The internal and external lips are radially deformed inwards outside of the rolling bearing. The seal is then axially pushed between the rings to be disposed into a housing delimited by two grooves of the rings, the seal substantially recovering by elasticity its overall initial shape, wherein the axial length of the grooves is larger than the axial length between the internal and external lips in a free state of the seal in order to have an axial gap between the internal lips and wall of the grooves and/or between the external lips and opposite walls of the grooves.

Illustrative and non-limiting embodiments of the present invention will be described below in detail with reference to the appended drawings, in which:
- Figure 1 is a half section of a rolling bearing comprising two seals according to a first embodiment of the invention,
- Figure 2 is a part section on a larger scale of the rolling bearing of Figure 1,
- Figure 3 is a part section showing the mounting of the seal of Figure 2,
- Figure 4 is a part section showing the extraction of the seal of Figure 2, and
- Figures 5, 6 and 7 are part sections of rolling bearings according to second, third and fourth embodiments of the invention.

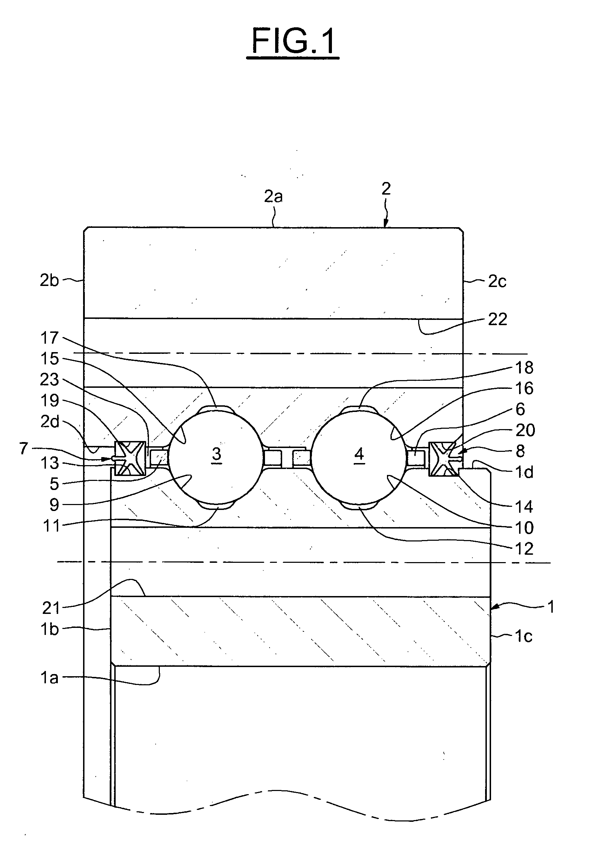

The rolling bearing as illustrated by Figure 1 is a large-diameter rolling bearing comprising an inner ring 1 and an outer ring 2 between which are housed two rows of rolling elements 3 and 4, which in this case are balls, two annular cages 5, 6 respectively maintaining the circumferential spacing of rolling elements 3 and 4, and two annular seals 7 and 8.

The inner and outer rings 1, 2 are concentric and symmetric with respect to a transverse radial plane passing through the centre of the rolling bearing. The inner ring 1 is of the solid type. A "solid ring" is to be understood as a ring obtained by machining with removal of material (by machining, grinding) from metal tube stock, bar stock, rough forgings and/or rolled blanks.

The inner ring 1 has a bore 1a of cylindrical shape designed to be fixed to a chassis or to a structure of a machine (not shown) and delimited by opposite radial lateral surfaces 1b, 1c. The inner ring 1 also includes an exterior cylindrical surface 1d onto which first and second toroidal circular races 9, 10 are formed. The racers 9 and 10 are mutually symmetric with respect to the transverse radial plane passing through the centre of the rolling bearing. Each race 9, 10 is subdivided by an annular groove 11, 12 into two raceways having in cross section a concave internal profile adapted to the rolling elements 3, 4. The raceways of the races 9, 10 are directed outwards.

The inner ring I also comprises two annular grooves 13, 14 formed radially towards the inside from the outer surface 1d, respectively in the vicinity of the radial surfaces 1b, 1c. The grooves 13, 14 are symmetrical relative to the radial plane passing through the centre of the rolling bearing. In this embodiment, the center of the rolling bearing is the point on the rotation axis of bearing and equidistant from the two rows of rolling elements 3, 4.

The outer ring 2, also of the solid type, comprises an outer cylindrical surface 2a delimited by opposite radial lateral surfaces 2b, 2c. The radial lateral surface 2c is axially set back from the corresponding radial surface 1c of the inner ring 1, whereas the radial lateral surface 1b of said inner ring is axially set back from the corresponding radial surface 2b of the outer ring. Alternatively, the radial lateral surfaces 2b and 1b, 2c and 1c of the inner and outer rings 1, 2 could be respectively coplanar.

The outer ring 2 also includes a bore 2d of cylindrical shape into which first and second toroidal circular races 15, 16 are formed. The races 15, 16 are mutually symmetric with respect to the radial plane passing through the centre of the rolling bearing. Similarly to races 9 and 10, each race 15, 16 is subdivided by an annular groove 17, 18 into two raceways having in cross section a concave internal profile adapted to the rolling elements 3, 4. The raceways of the races 15, 16 are directed radially inwards. Each rolling element 3, 4 respectively arranged between the raceways of the races 9, 15 and 10, 16, while at the same time being kept spaced apart by the cages 5 and 6, have four points of contact with the rings 1, 2 so that the bearing has a high rigidity both radially and axially.

The outer ring 2 also comprises two annular grooves 19, 20 formed radially towards the outside from the bore 2d, respectively in the vicinity of the radial surfaces 1c, 2c. The groove 19, 20 is respectively situated in a radial plane containing the groove 13, 14. The groove 13, 14 respectively radially faces the grooves 19, 20.

In this embodiment, the rings 1, 2 comprise, in a way known per se, holes 21 and 22 for fixing the two rings to two parts of a machine, which can rotate one with respect to the other by virtue of the rolling bearing.

The two rings 1, 2 are separated radially from one another by an annular space 23 in which the cages 5, 6 rotate. In the vicinity of the radial surfaces 1b and 2b, 1c and 2c, the radial dimension of the space 23 is increased by virtue of the grooves 13 and 19, 14 and 20. The seals 7, 8 are positioned radially between the inner and outer rings 1, 2 inside these zones of the space 23 which are delimited by the grooves 13 and 19, 14 and 20. The seal 7 is mounted axially between the rolling elements 3 and the radial surface 1b of the ring 1. The seal 7 is entirely housed into the rings 1 and 2. In other words, the seal 7 is axially offset relative to the radial surfaces 1b, 2b towards the interior of the rolling bearing.

The seal 8 is positioned axially between the rolling elements 4 and the radial surface 2c of the ring 2. The seal 8 is identical to the seal 7 and is positioned symmetrically with respect to the latter with regard to the radial plane passing through the centre of the rolling bearing. A closed space is defined between the rings 1, 2 and the seals 7, 8 in which the rolling members 3, 4 are housed so as to be protected against polluting elements.

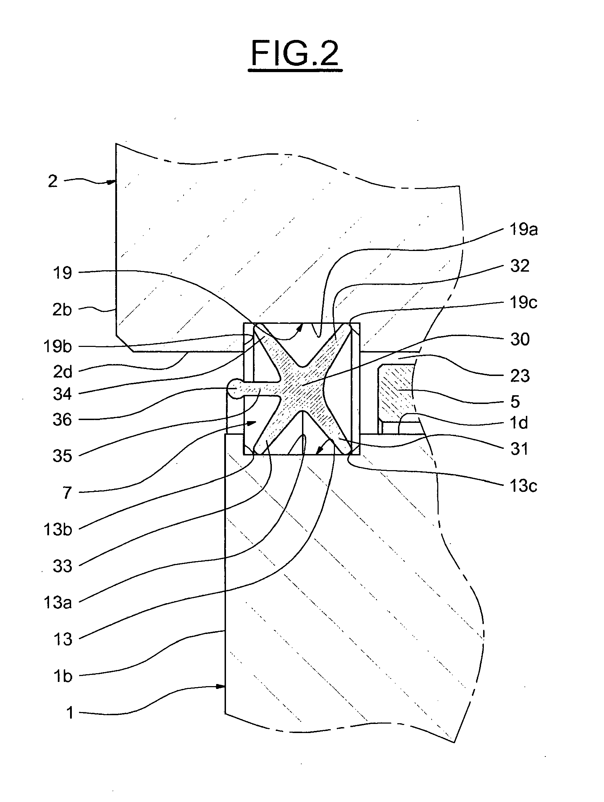

As shown more clearly on Figure 2, the seal 7 formed of an elastic material comprises an annular central portion 30, two annular internal lips 31, 32 and two annular external lips 33, 34. Said lips are issued from the annular portion 30 and have in cross section the overall shape of a X. The lips 31, 32 and 33, 34 are symmetric with respect to a transverse radial plane passing through the centre of the seal 7, the lips 31, 33 and 32, 34 being also symmetric with respect to a transverse axial plane passing through the central portion 30. The lips 31, 32 are directed obliquely towards the inside of the rolling bearing, the lips 33, 34 being directed obliquely outwards. The lips 31, 33 extends radially towards the inner ring 1, the lips 32, 34 extending radially towards the outer ring 2. The lips 31, 33 and 32, 34 respectively press against the axial bottom 13a, 19a of the groove 13, 19 provided on the ring 1, 2. The friction lips 31 to 34 have a certain degree of radial elasticity and join or attach directly the central portion 30. In the illustrated embodiment, the thickness of the lips 31 to 34 reduces from the central portion 30 towards their free ends. Thus, there is less friction between the seal 7 and the rings 1, 2. Alternatively, it could also be possible to foresee a seal with lips having a thickness which increases from the central portion 30 towards their free ends.

The seal 7 also comprises an annular grip portion 35 issued from the central portion 30 and extending axially towards the external lips 33, 34. The grip portion 35 is located on the external side of the seal 7 and extends towards the outside of the rolling bearing. The grip portion 35 is provided at its free end with a rib or protrusion 36. The protrusion 36 has here a spherical form and is axially offset outwards relative to the external lips 33, 34. Alternatively, the protrusion 36 may be axially offset towards the central portion 30 relative to said lips 33, 34. The annular protrusion 36 is axially offset relative to the radial surface 1b of the inner ring 1 towards the interior of the rolling bearing. The grip portion 35 and the protrusion 36 are located in the axial plane passing through the central portion 30 with regards to which the lips 33, 34 are symmetric. In this embodiment, the grip portion 35 is continuous in the circumferential direction of the seal 7. Alternatively, the grip portion may be segmented in the circumferential direction or may comprise axial lugs spaced with respect to one another.

The seal 7 is radially maintained into the annular space 23 defined between the inner and outer rings by the bottoms 13a, 19a of the grooves 13, 19. Only the free ends of the lips 31, 33 and 32, 34 press against said bottoms. The annular central portion 30 of the seal 7 is radially disposed into the housing delimited by the grooves 13, 19 in a non-contact state. The grip portion 35 and the protrusion 36 are also in a non-contact state with the rings 1, 2. In other words, a first annular radial gap is provided between the cylindrical surface 1d of the inner ring 1 and the grip portion 35 and the protrusion 36, and a second annular radial gap is provided between these elements of the seal 7 and the bore 2d of the outer ring 2.

In order to keep in a permanent contact state the lips 31, 33 and 32, 34 with the axial bottoms 13a and 19a of the grooves 13 and 19, the radial dimension of the seal 7 in a free state is made larger than the radial dimension of the space delimited by said grooves. Thus, by the elasticity of the seal 7 in radial direction, the lips 31 to 34 are kept in permanent contact with the bottom 13a, 19a. The seal 7 and the rings 1, 2 are thus resiliently coupled in the radial direction which prevents relative radial displacement between the seal 7 and said rings.

Furthermore, in any condition during operation, a radial gap always remains between the central portion 30 and the grip portion 35 of the seal 7 and the bottom 13a of the groove 13, and between said central portion and grip portion of the seal and the bottom 19a of the groove 19. Thanks to this, the central portion 30, the grip portion and the protrusion 36 do not contact the rings 1, 2 which would create abnormal excess of friction torque.

The axial dimension of the grooves 13, 14 is larger than the axial dimension between the internal lips 31, 32 and the external lips 33, 34 in order that relative axial slight movements may occur between the seal 7 and the rings 1, 2. In the embodiment depicted, an axial annular gap is provided between the lips 33, 34 and radial walls 13b, 19b of the grooves 13, 19. An axial annular gap is also provided between the lips 31, 32 and opposite radial walls 13c, 19c of said grooves. For example, the axial gaps provided between the seal and the radial walls 13b, 19b and 13c, 19c of the grooves 13, 19 may be equal to one or two millimeters. The radial walls 13b, 19b and 13c, 19c are respectively coplanar.

In case of axial relative axial movements between the two rings 1, 2 in addition to the rotational movements, under the action of the loads to which the rolling bearing may be subjected during operation of the machine, the lips 31, 33 and 32, 34 still press against the axial bottoms 13a and 19a of the grooves 13 and 19, thus maintaining their sealing functions. Otherwise, when the rings 1, 2 move radially relative towards each other, the gaps provided between the lips 31 to 34 and the radial walls of the grooves 13, 19 allow said lips to change slightly their inclination in order to adapt the radial dimension of the seal to the reduced space delimited by the grooves 13, 19. In this case, the lips 31 to 34 still bear against the axial bottoms 13a, 19a of the grooves 13, 19.

The internal lips 31, 32 axially located towards the cage 5 and the rolling element 3, i.e. on the internal side of the rolling bearing, prevent any escape of grease from the inside of the bearing to the outside. The lips 31, 32 being directed obliquely inwards the rolling bearing, any increase in pressure inside the bearing leads to an increase of the pressing force of lips 31, 32 against the bottom 13a, 19a of the grooves 13, 19 without the risk of said lips being expelled under the effect of the raised pressure likely to occur, for example when lubricating the bearing through greasing holes (not shown).

The external lips 33, 34 axially located towards the external side of the rolling bearing prevent foreign matter from entering inside of the bearing, such as moisture, dust or muddy wetter. Any increase in pressure outside the bearing also leads to an increase of the pressing force of the lips 33, 34 against the rings 1, 2. The internal lips 31, 32 supplement the action of the external lips 33, 34 and vice-versa, and improve the protection against the ingress of moisture and other foreign bodies into the rolling bearing from the outside.

With an increase of the pressure inside or outside the bearing occurs, the seal 7 can nevertheless move freely relative to the rings 1, 2 in the axial direction, the lips 31 to 34 maintaining their sealing function. With such axial displacement of the seal 7, radial walls 13b, 19b and 13c, 19c of the grooves 13, 19 may form means of axially retaining the seal 7 into the space delimited by said grooves. To this end, the internal diameter of the lips 31, 33 is smaller than the diameter of the cylindrical surface 1d, and the external diameter of the lips 32, 34 is larger than the diameter of the bore 2d. The internal lips 31, 32 and the external lips 33, 34 of the seal 7 also maintain their sealing functions in the event of radial or tipping movements of the inner and outer rings 1, 2 under the action of said loads.

During operation, either when one ring of the bearing rotates with respect to the other or when it stands still, the seal 7 can also move in the circumferential direction relative to the inner ring 1, and/or outer ring 2. In this case, sliding occurs against the bottom 13a, 19a of the grooves 13, 19. With such a sliding, a little wear may occur on the lips 31 to 34. However, with the elasticity of the seal 7 in radial direction, the lips 31 to 34 are kept in permanent contact with the bottom 13a, 19a.

The circumferential movement of the seal 7 relative to the rings 1, 2 remains possible since there is no fixing part between these elements. The seal 7 is namely not rigidly fixed to one of said rings 1, 2 in the circumferential direction. This makes easier the mounting of the seal 7 inside of the bearing. Specifically, the seal 7 may be mounted with an axial pushing movement without angular indexation.

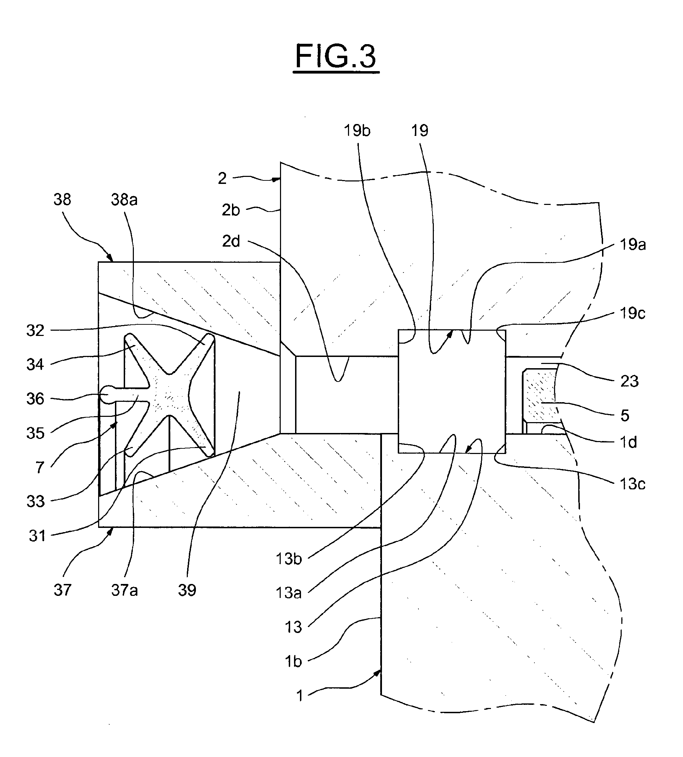

As shown on Figure 3, to achieve the mounting of the seal 7 into the rolling bearing, in a first step, annular guides 37, 38 are mounted bearing against radial surfaces 1b, 2b of the rings 1, 2. The guides 37, 38 each comprise a frustoconical surface 37a, 38a radially facing each other and delimiting radially therebetween an annular passage or hole 39 having a frustroconical form which narrows inwards in direction of the rolling bearing in order that a small diameter edge of said hole axially extends the annular space 23 provided between the rings 1, 2. For instance, the frustoconical surfaces 37a, 38a each make an angle comprised between 5 and 20° with the axis of the rolling bearing. The inclination of the frustoconical surfaces 37a, 38a are identical.

Then, the seal 7 is disposed into the hole 39 and pushed axially towards the rolling bearing. By virtue of the frustoconical form of said hole, the lips 31, 32 and 33, 34 are radially compressed or deformed towards the central portion 30. The radial deformation of the lips 31 to 34 inwards is achieved outside of the rolling bearing. After passing through the hole 39, the seal 7 is axially pushed between the rings 1, 2 until to be disposed into the space delimited by the grooves 13, 19. The lips 31 to 34 then recover by elasticity their initial shape and press against the bottoms 13a, 19a of said grooves. To push axially the seal into the hole 39 and between the rings 1 and 2, the grip portion 35 may be used.

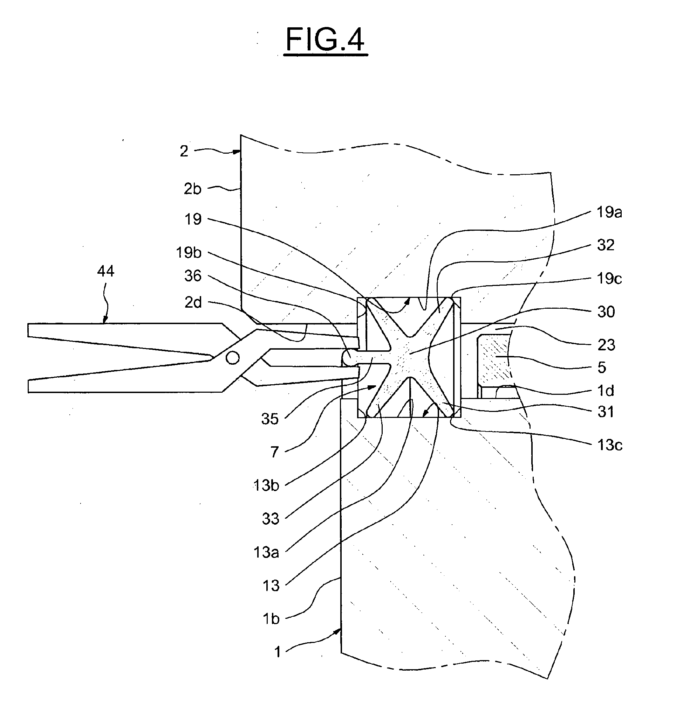

The grip portion 35 and the protrusion 36 are however mainly foreseen to make easier the extraction of the seal 7 outside of the bearing. In fact, as shown on Figure 4, the grip portion 35 and the protrusion 36 being into a non-contact state with the rings 1 and 2, a tool, for example a plier 44, may be inserted radially between said rings to catch the protrusion 36 of the grip portion 35 and to extract the seal 7 outside of the rolling bearing by a simple axial pulling movement. In other words, the grip portion 35 forms on the seal 7 a rib extending towards the outside of the rolling bearing. The grip portion 35 extends axially beyond the lips 33, 34 towards the outside to make easier the gripping of the seal 7.

Advantageously, the seal 7 is integrally formed in one part from an elastic material flexible enough to allow an easy installation into the bearing, for example a thermoplastic urethane (TPU) liner or an elastomer, such as an acrylonitrile-butadiene rubber (NBR) offering also a good resistance to low and high temperatures, to wear, to ozone, to ultraviolet radiations, and being an excellent fungal inhibitor. Besides, with such materials, the seal 7 can easily be manufactured by extrusion at the desired X-shaped section in the form of a band, and after cutting to the desired length, and then wound on itself. To obtain the seal 7, a heating plate may be used to heat the ends of the band in order to weld them end to end. With such a welding, the mechanical properties of the seal outperform those obtained with a seal wounding on itself and connected end to end by glue. Alternatively, the seal 7 may also be obtained by turning.

As above-mentioned, the sealing of the bearing on the other side is provided by the seal 8 which is identical to the seal 7 and which cooperates with grooves 14, 20 of the inner and outer rings 1, 2.

Advantageously, the bottom of the grooves 13, 14 and 19, 20 provided on the inner ring 1 and outer ring 2 are coated to prevent corrosion under the lip ends when the rolling bearing is used in aggressive environments. The coating used can be rubber, zinc, non-corroding steel, ceramic, organic material with ceramics, particles, or polytetrafluorethylene. For instance, the coating can be applied by means of thermal spray, anodizing, physical vapor deposition, cold spray, welding, gluing; etc.

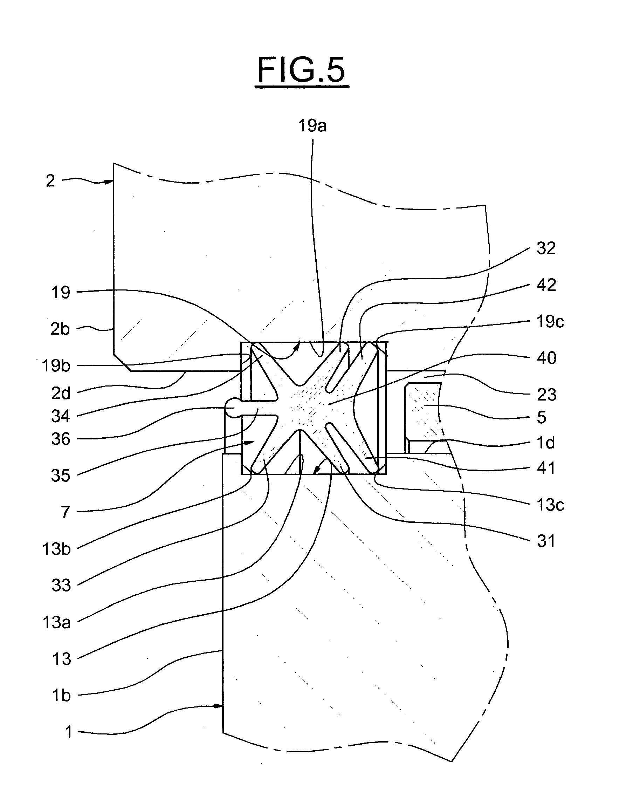

On the embodiment illustrated in Figure 5, in which identical parts are given identical references, the seal 7 further comprises an annular heel 40 extending axially the central portion 30 on the side opposite to the grip portion 35 and two additional annular internal lips 41, 42 issued from the heel 40 and axially offset inwards relative to the internal lips 31, 32. The lips 41, 42 are symmetric with respect to the transverse axial plane passing through the central portion 30. The lips 41, 42 have substantially the same shape as the lips 31, 32. The lips 41, 42 respectively press against the bottom 13a, 19a of the groove 13, 19. An axial annular gap is provided between the lips 41, 42 and radial walls 13c, 19c of the grooves. In this embodiment, the axial length of the grooves 13, 19 is increased. With such additional internal lips 41 and 42, the efficiency of the seal 7 is improved. Alternatively, it could also be possible to foresee additional external lips on the seal in combination or in substitution of the internal lips 41, 42. The seal 7 can have eight or more lips.

In the previous embodiments, the seal 7, 8 are formed from an elastic material like a thermoplastic urethane liner or an elastomer. Alternatively, the seals can be made from metal, for example stainless steel or an extruded metal like a corrosion resistant aluminum alloy. In case of extruded metal, the profile of the seals remains the same. In case of stainless steel, the seals would be of profiled annular bands fixed together.

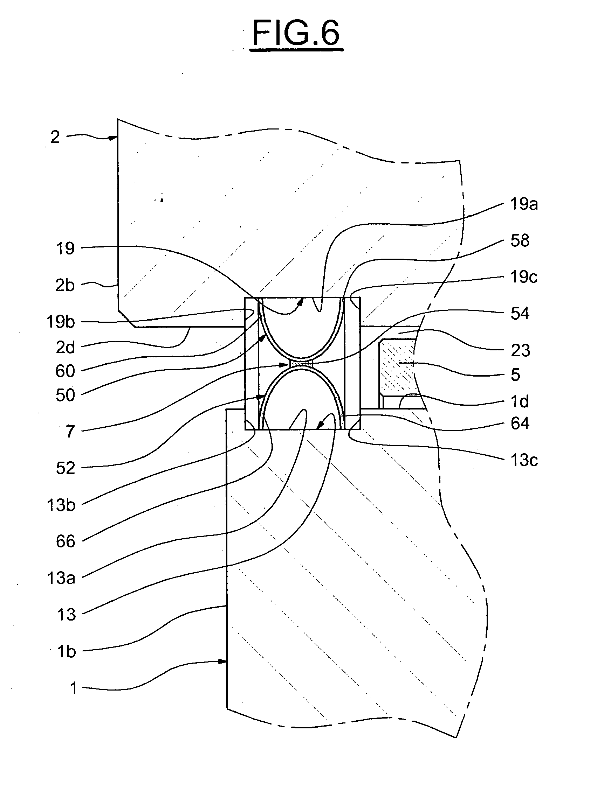

For instance, on the embodiment illustrated in Figure 6, in which identical parts are given identical references, the seal 7 comprises first and second annular parts 50, 52 fixed together by a connection part 54 radially disposed therebetween. The first part 50 is made in one part and comprises an internal lip 58 and an external lip 60 which are symmetric with respect to a transverse radial plane passing through the centre of the seal. The second part 52 is symmetric to the first part 50 with respect to a transverse axial plane passing through the connection part 54. The second part 52 is also made in one part and comprises an internal lip 64 and an external lip 66. The disposition of the internal lips 58, 64 and of the external lips 60, 66 with regards to the inner and outer rings 1, 2 is the same as the previously described for the lips 31, 32 and 33, 34. The connection part 54 may be electron beam welding, laser welding, soldering, gluing or any other appropriate means.

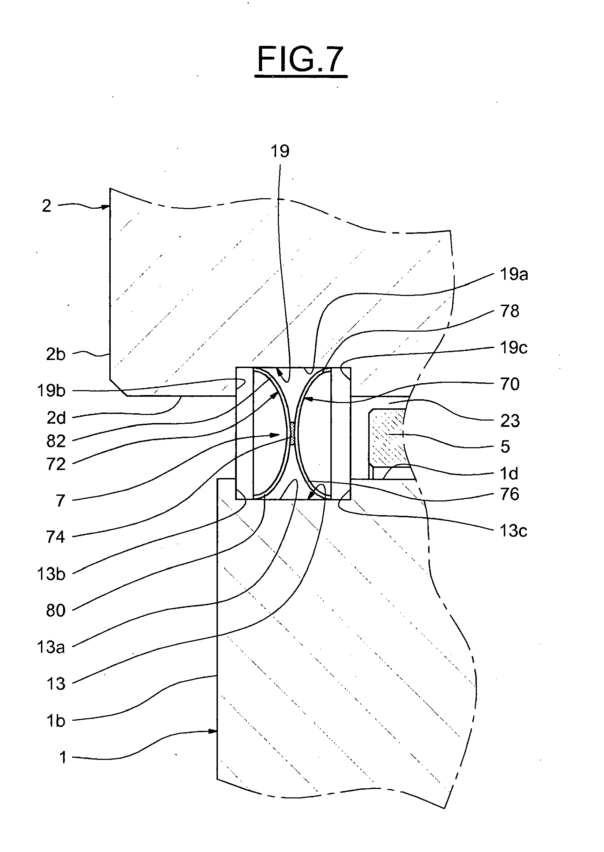

In the embodiment illustrated in Figure 7, in which identical parts are given identical references, the seal 7 comprises first and second annular parts 70, 72 fixed together by a connection part 74 axially disposed therebetween. The first part 70 is made in one part and comprises internal lips 76, 78. The second part 72 is also made in one part and comprises external lips 80, 82. The first and second part 70, 72 are connected by the connection part 74 which may be electron beam welding, laser welding, soldering, gluing or any other appropriate means.

In the last two embodiments, coatings may be provided on the free ends of the internal and external lips to avoid a metal/metal contact between the seal and the rings. With seals made from metal, the thickness of the lips may be for example equal to 0,3 mm.

In the last two embodiments, the X-shaped seals do not comprise a grip portion. Alternatively, it could also be possible to foresee a grip portion and a protrusion as disclosed in the first embodiment. In another embodiment, it could also be possible to not foresee the grip portion for the seal disclosed in the first embodiment.

It should be noted that the embodiments illustrated and described were given merely by way of non-limiting indicative examples and that modifications and variations are possible within the scope of the invention. Thus, the invention applies not only to double rows of balls with four-point contact but also to other types of rolling bearing, for example bearings with a single row of balls, or with at least free rows of balls. It is easily understood that it could also be possible to use bearing with other types of rolling members such as rollers. Otherwise, several X-shaped seals may be inserted into a same groove of the rolling bearing. The disclosed rolling bearings are particularly useful as bearing for wind turbines which are submitted to high internal pressures and exposed to UV light and rain water.

## Claims

1. Rolling bearing comprising an inner ring (1), an outer ring (3), at least one row of rolling elements (3), and at least one seal (7) comprising at least two axially internal lips (31, 32) and two axially external lips (33, 34) respectively directed obliquely towards the internal side and the external side of the rolling bearing, said internal and external lips having in cross section the overall shape of a X, **characterized in that** the inner and outer rings comprise opposite radial grooves (13, 19) inside which the free ends of the internal and external lips of the seal (7) are located, the axial length of the grooves (13, 19) being larger than the axial length between the internal lips (31, 32) and the external lips (33, 34) in a free state of the seal in order to have an axial gap between the internal lips and walls (13c, 19c) of the grooves and/or between the external lips and opposite walls (13b, 19b) of said grooves.

2. Rolling bearing according to claim 1, wherein the internal and external lips of the seal are resiliently coupled in the radial direction with the inner and outer rings.

3. Rolling bearing according to claims 1 or 2, wherein the seal is moveable in the circumferential direction relative to the inner ring and/or the outer ring.

4. Rolling bearing according to any of the preceding claims, wherein the seal comprises a central portion (30) from which the internal lips (31, 32) and the external lips (33, 34) are issued.

5. Rolling bearing according to claim 4, wherein the thickness of the internal and external lips varies from the central portion towards their free ends.

6. Rolling bearing according to any of the preceding claims, wherein the seal comprises a grip portion (35) extending axially towards the external lips (33, 34).

7. Rolling bearing according to claims 4 and 6 taken together, wherein the grip portion (35) extends axially from the central portion (30).

8. Rolling bearing according to claims 6 or 7, wherein the free end of the grip portion (35) is axially offset outwards relative to the external lips (33, 34).

9. Rolling bearing according to any of the preceding claims, wherein the seal comprises at least two additional lips (41, 42) on the external side and/or on the internal side of said seal.

10. Rolling bearing according to any of preceding claims, wherein the seal is formed from thermoplastic urethane liner.

11. Rolling bearing according to any of the preceding claims 1 to 9, wherein the seal is formed from metal.

12. Assembly method of a seal inside a rolling bearing comprising an inner ring (1) an outer ring (3) and at least one row of rolling elements (3) between said outer and inner rings having opposite radial grooves (13,19), said seal comprising at least two internal lips (31,32) and two external lips (33,34) having in cross section the overall shape of a X, **characterized in that** the internal (31,32) and external lips (33,34) are radially deformed inwards outside of the rolling bearing, and **in that** the seal is then axially pushed between the rings (1,2) to be disposed into a housing delimited by the two grooves (13,19) of the rings, the seal recovering by elasticity its initial shape, the axial length of the grooves (13,19) being larger than the axial length between the internal lips (31,32) and the external lips (33,34) in a free state of the seal in order to have an axial gap between the internal lips (31,32) and walls (13c,19c) of the grooves (13,19) and/or between the external lips (33,34) and opposite walls (13b,19b) of said grooves (13,19).

## Patentansprüche

1. Wälzlager, umfassend einen Innenring (1), einen Außenring (2), wenigstens eine Reihe von Wälzelementen (3) und wenigstens eine Dichtung (7), die wenigstens zwei in der Achsenrichtung innere Lippen (31, 32) und zwei in der Achsenrichtung äußere Lippen (33, 34) umfasst, die jeweils schräg zu der Innenseite bzw. der Außenseite des Wälzlagers gerichtet sind, wobei die inneren und äußeren Lippen im Querschnitt die Gesamtform eines X aufweisen, **dadurch gekennzeichnet, dass** der innere und der äußere Ring entgegengesetzte radiale Nuten (13, 19) umfassen, in denen sich die freien Enden der inneren und äußeren Lippen der Dichtung (7) befinden, wobei die Länge der Nuten (13, 19) in der Achsenrichtung größer als die Länge in der Achsenrichtung zwischen den inneren Lippen (31, 32) und den äußeren Lippen (33, 34) in einem freien Zustand der Dichtung ist, damit zwischen den inneren Lippen und den Wänden (13c, 19c) der Nuten und/oder zwischen den äußeren Lippen und entgegengesetzten Wänden (13b, 19b) der Nuten ein Zwischenraum in der Achsenrichtung vorhanden ist.

2. Wälzlager nach Anspruch 1, wobei die inneren und äußeren Lippen der Dichtung in der radialen Richtung elastisch mit dem Innen- und dem Außenring gekoppelt sind.

3. Wälzlager nach Anspruch 1 oder 2, wobei die Dichtung in der Umfangsrichtung in Bezug auf den Innenring und/oder den Außenring beweglich ist.

4. Wälzlager nach einem der vorhergehenden Ansprüche, wobei die Dichtung einen mittleren Abschnitt (30) umfasst, von dem die inneren Lippen (31, 32) und die äußeren Lippen (33, 34) ausgehen.

5. Wälzlager nach Anspruch 4, wobei sich die Dicke der inneren und äußeren Lippen von dem mittleren Abschnitt zu ihren freien Enden hin verändert.

6. Wälzlager nach einem der vorhergehenden Ansprüche, wobei die Dichtung einen Griffabschnitt (35) umfasst, der sich in der Achsenrichtung zu den äußeren Lippen (33, 34) erstreckt.

7. Wälzlager nach Anspruch 4 zusammen mit Anspruch 6, wobei sich der Griffabschnitt (35) in der Achsenrichtung von dem mittleren Abschnitt (30) weg erstreckt.

8. Wälzlager nach Anspruch 6 oder 7, wobei das freie Ende des Griffabschnitts (35) in Bezug auf die äußeren Lippen (33, 34) in der Achsenrichtung nach außen versetzt ist.

9. Wälzlager nach einem der vorhergehenden Ansprüche, wobei die Dichtung wenigstens zwei zusätzliche Lippen (41, 42) an der Außenseite und/oder an der Innenseite der Dichtung umfasst.

10. Wälzlager nach einem der vorhergehenden Ansprüche, wobei die Dichtung aus einer the oplastischen Urethaneinlage gebildet ist.

11. Wälzlager nach einem der vorhergehenden Ansprüche 1 bis 9, wobei die Dichtung aus Metall gebildet ist.

12. Verfahren zur Montage einer Dichtung in einem Wälzlager, das einen Innenring (1), einen Außenring (2) und wenigstens eine Reihe von Wälzelementen (3) zwischen dem Innen- und dem Außenring, die entgegengesetzte radiale Nuten (13, 19) aufweisen, umfasst, wobei die Dichtung wenigstens zwei innere Lippen (31, 32) und zwei äußere Lippen (33, 34) umfasst, die im Querschnitt die Gesamtform eines X aufweisen, **dadurch gekennzeichnet, dass** die inneren (31, 32) und äußeren Lippen (33, 34) außerhalb des Wälzlagers radial einwärts verformt werden, und dass die Dichtung dann in der Achsenrichtung zwischen die Ringe (1, 2) geschoben wird, damit sie in einem Gehäuse angeordnet wird, das durch die beiden Nuten (13, 19) der Ringe begrenzt wird, wobei die Dichtung durch Elastizität ihre ursprüngliche Form wiedererlangt, wobei die Länge der Nuten (13, 19) in der Achsenrichtung größer als die Länge in der Achsenrichtung zwischen den inneren Lippen (31, 32) und den äußeren Lippen (33, 34) in einem freien Zustand der Dichtung ist, damit zwischen den inneren Lippen (31, 32) und den Wänden (13c, 19c) der Nuten (13, 19) und/oder zwischen den äußeren Lippen (33, 34) und entgegengesetzten Wänden (13b, 19b) der Nuten (13, 19) ein Zwischenraum in der Achsenrichtung vorhanden ist.

## Revendications

1. Palier à roulement comprenant une bague interne (1), une bague externe (2), au moins une rangée d'éléments de roulement (3) et au moins un joint (7) comprenant au moins deux lèvres axialement internes (31, 32) et deux lèvres axialement externes (33, 34) orientées respectivement obliquement vers le côté interne et le côté externe du palier à roulement, lesdites lèvres internes et externes ayant, en section transversale, la forme générale d'un X, **caractérisé en ce que** les bagues interne et externe comprennent des gorges radiales opposées (13, 19) à l'intérieur desquelles sont situées les extrémités libres des lèvres internes et externes du joint (7), la longueur axiale des gorges (13, 19) étant supérieure à la longueur axiale entre les lèvres internes (31, 32) et les lèvres externes (33, 34) dans un état libre du joint, afin de laisser un espace axial entre les lèvres internes et des parois (13c, 19c) des gorges et/ou entre les lèvres externes et des parois opposées (13b, 19b) desdites gorges.

2. Palier à roulement selon la revendication 1, dans lequel les lèvres internes et externes du joint sont accouplées de manière élastique dans la direction radiale aux bagues interne et externe.

3. Palier à roulement selon les revendications 1 ou 2, dans lequel le joint peut être déplacé dans la direction circonférentielle par rapport à la bague interne et/ou la bague externe.

4. Palier à roulement selon l'une quelconque des revendications précédentes, dans lequel le joint comprend une portion centrale (30) depuis laquelle partent les lèvres internes (31, 32) et les lèvres externes (33, 34).

5. Palier à roulement selon la revendication 4, dans lequel l'épaisseur des lèvres internes et externes varie depuis la portion centrale vers leurs extrémités libres.

6. Palier à roulement selon l'une quelconque des revendications précédentes, dans lequel le joint comprend une portion de préhension (35) s'étendant axialement vers les lèvres externes (33, 34).

7. Palier à roulement selon les revendications 4 et 6 prises conjointement, dans lequel la portion de préhension (35) s'étend axialement depuis la portion centrale (30).

8. Palier à roulement selon les revendications 6 ou 7, dans lequel l'extrémité libre de la portion de préhension (35) est décalée axialement vers l'extérieur par rapport aux lèvres externes (33, 34).

9. Palier à roulement selon l'une quelconque des revendications précédentes, dans lequel le joint comprend au moins deux lèvres supplémentaires (41, 42) sur le côté externe et/ou sur le côté interne dudit joint.

10. Palier à roulement selon l'une quelconque des revendications précédentes, dans lequel le joint est formé d'une doublure en uréthane thermoplastique.

11. Palier à roulement selon l'une quelconque des revendications précédentes 1 à 9, dans lequel le joint est formé de métal.

12. Procédé d'assemblage d'un joint à l'intérieur d'un palier à roulement comprenant une bague interne (1), une bague externe (2) et au moins une rangée d'éléments de roulement (3) entre lesdites bagues externe et interne ayant des gorges radiales opposées (13, 19), ledit joint comprenant au moins deux lèvres internes (31, 32) et deux lièvres externes (33, 34) ayant, en section transversale, la forme générale d'un X, **caractérisé en ce que** les lèvres internes (31, 32) et externes (33, 34) sont déformées radialement vers l'intérieur à l'extérieur du palier à roulement, et **en ce que** le joint est ensuite poussé axialement entre les bagues (1, 2) de manière à être disposé dans un boîtier délimité par les deux gorges (13, 19) des bagues, le joint retrouvant, par élasticité, sa forme initiale, la longueur axiale des gorges (13, 19) étant supérieure à la longueur axiale entre les lèvres internes (31, 32) et les lèvres externes (33, 34) dans un état libre du joint afin de laisser un espace axial entre les lèvres internes (31, 32) et des parois (13c, 19c) des gorges (13, 19) et/ou entre les lèvres externes (33, 34) et des parois opposées (13b, 19b) desdites gorges (13, 19).
